# EUROPÄISCHE PATENTSCHRIFT

(11) **EP 1 155 891 B1**
(45) Veröffentlichungstag und Bekanntmachung des Hinweises auf die Patenterteilung: **09.02.2005**
(21) Anmeldenummer: 01108102.3
(22) Anmeldetag: 30.03.2001
(51) Int. Cl.: B60J 7/10, B60P 7/08

(54) **Einrichtung zum Spannen einer Seitenplane eines Fahrzeugaufbaus**
Tensioning device for side tarpaulin of a vehicle constuction
Dispositif pour tensioner la bâche latérale d'une carrosserie de véhicule

(30) Priorität: 18.05.2000 DE 10024623
(43) Veröffentlichungstag der Anmeldung: 21.11.2001
(73) Patentinhaber: Franz Miederhoff oHG, D-59846 Sundern (DE)
(72) Erfinder: Than, Johannes, 59846 Sundern- Endorf (DE)
(74) Vertreter: Schröter & Haverkamp

(56) Entgegenhaltungen:
- DE-U- 29 913 954
- GB-A- 2 340 164
- US-A- 4 279 064

## Beschreibung

Die Erfindung betrifft eine Einrichtung zum Spannen einer oberseitig gehaltenen Seitenplane eines Fahrzeugaufbaus, umfassend zumindest einen im Bereich des unteren Endes der Seitenplane angeordneten und mit der Seitenplane verbundenen Seitenplanenspanner, ein ortsfest am Fahrzeugaufbau angeordnetes Element als Widerlager für den Seitenplanenspanner zum Spannen der Seitenplane und Mittel, mit denen der Seitenplanenspanner in seiner die Plane spannenden Stellung an dem ortsfesten Element festlegbar ist.

Eine solche Einrichtung zum Spannen einer Seitenplane eines Fahrzeugaufbaus ist aus der DE 44 15 042 C1 bekannt. Beim Gegenstand dieses Dokumentes dient als ortsfestes Element und somit als Widerlager für den Seitenplanenspanner die untere Kante eines am Fahrzeugaufbau befindlichen Profiles, beispielsweise des Außenrahmens. Der Seitenplanenspanner selbst ist über einen in seiner Länge einrichtbaren Gurt mit der Seitenplane verbunden und befindet sich auf der Außenseite der Seitenplane. Der Seitenplanenspanner umfaßt ein Grundelement, an dem ein Haken angeformt ist, der zum Spannen der Seitenplane, beispielsweise an der unteren Kante des Außenrahmens des Fahrzeugaufbaus festlegbar ist. An den Grundelement schwenkbar angelenkt ist ein Spannhebel, durch dessen Verschwenken von seiner Offen-Stellung in seine Geschlossen-Stellung eine Spannung des Gurtes und somit der Seitenplane erfolgt. Bei dem in diesem Dokument beschriebenen Seitenplanenspanner wird der Spannhebel in seiner Geschlossen-Stellung durch eine Klinke verriegelt gehalten. Neben derartigen Ausführungen sind auch sogenannte Übertotpunktspanner bekannt, bei denen eine zusätzliche Verriegelung des Spannhebels in der Geschlossen-Stellung nicht notwendig ist

Ein weiterer Seitenplanenspanner ist aus der gattungsgemäßen GB-2340164 bekannt.

Als Mittel zum Festlegen des Seitenplanenspanners an seinem Widerlager - dem am Fahrzeugaufbau angeordneten ortsfesten Element - dienen demnach der an dem Grundelement angeformte Haken durch das Hintergreifen des ortsfesten Elementes und die durch den Spannhebel auf die Seitenplane gebrachte Zugspannung. Allein durch Spannung ist der Haken in seiner das ortsfeste Element hintergreifenden Stellung fixiert. Nachteilig bei einem solchen Seitenplanenspanner ist, daß bei einem Nachlassen der auf den Seitenplanenspanner in seiner Geschlossen-Stellung wirkenden Spannkraft, beispielsweise infolge einer Ausdehnung der Seitenplane durch eine Temperaturerhöhung oder auch durch eine Zerstörung ein Verbleiben des Seitenplanenspanners in seiner bestimmungsgemäßen, das ortsfeste Element hintergreifenden Position nicht gewährleistet werden kann. Entsprechendes tritt auch ein, wenn beispielsweise der obere Längsträger, an dem die Seitenplane oberseitig gehalten ist, sich infolge einer Belastung nach unten durchbiegt, was insbesondere bei Tunneldurchfahrten vorkommen kann. Läßt die auf einen solchen Seitenplanenspanner durch die Seitenplane wirkende Spannkraft nach, kann dieser aus seiner mit seinem Haken das ortsfeste Element hintergreifenden Stellung herausschwenken, so daß er nicht mehr gesichert ist. Der oder die Seitenplanenspanner flattern sodann am unteren Ende der nicht mehr fixierten Seitenplane und stellen ein nicht unerhebliches Gefahrenpotential dar.

Bei dem vorbekannten Seitenplanenspanner wird ebenfalls als nachteilig empfunden, daß in der Offen-Stellung des Seitenplanenspanners der am Grundelement angeformte Haken in der Flucht des als Widerlager dienenden ortsfesten Elementes, beispielsweise der Unterkante des Außenrahmens angeordnet ist. Damit eine Seitenplane ausgerüstet mit derartigen Seitenplanenspannern nach oben aufgerollt werden kann, muß sichergestellt werden, daß die Seitenplanenspanner sich soweit von dem ortsfesten Element beabstandet befinden, daß die Haken sich außerhalb der Flucht des ortsfesten Elementes befinden. In der Regel werden daher zum Aufrollen einer solchen Seitenplane zwei Personen benötigt, wobei eine Person die Aufrolleinrichtung betätigt und die andere Person gleichzeitig die Seitenplane vom Fahrzeugaufbau wegzieht.

Ausgehend von diesem diskutierten Stand der Technik liegt der Erfindung daher die Aufgabe zugrunde, eine eingangs genannte gattungsgemäße Einrichtung zum Spannen einer Seitenplane eines Fahrzeugaufbaus dergestalt auszubilden, daß insbesondere die beim diskutierten Stand der Technik aufgezeigten Nachteile in Bezug auf ein unerwünschtes Lösen der Seitenplanenspanner vermieden ist.

Diese Aufgabe wird erfindungsgemäß dadurch gelöst, daß das ortsfest am Fahrzeugaufbau angeordnete Element in seinem Querschnitt oberseitig eine nach unten offene Einstecktasche und im Bereich seines unteren Endes eine Verriegelungskante sowie zwischen diesen beiden Elementen ein nach unten wirkendes Anschlagelement aufweist und der Seitenplanenspanner ein als Spannhebel dienendes und mit der Seitenplane verbundenes Grundelement, von dem zumindest ein Teil seines oberen Endbereiches als Einsteckabschnitt zum Einstecken in die Einstecktasche des ortsfesten Elementes ausgebildet und an dem schwenkbar ein Verschlußhaken zum Hintergreifen der Verriegelungskante des ortsfesten Elementes angelenkt ist, und einen Gegenanschlag zum Zusammenwirken mit dem Anschlagelement des ortsfesten Elementes umfaßt.

Beim Gegenstand der erfindungsgemäßen Einrichtung dient als ortsfestes Element ein beispielsweise profilierter Körper, der in seinem oberen Bereich eine nach unten offene Einstecktasche und in seinem unteren Bereich eine Verriegelungskante aufweist. Das ortsfeste Element kann ein der Längserstreckung des Fahrzeugaufbaus folgendes Profil sein. Der mit diesem ortsfesten Element zusammenwirkende Seitenplanenspanner umfaßt ein als Spannhebel ausgebildetes Grundelement, das mit seinem oberen Endabschnitt in die Einstecktasche des ortsfesten Elementes einsteckbar ist. Mit diesem Abschnitt stützt sich der Seitenplanenspanner an der als Widerlager dienenden Einstecktasche des ortsfesten Elementes zum Spannen der Seitenplane ab. Mit dem Grundelement verbunden ist die Seitenplane, wobei die beiden Elemente - Seitenplane und Seitenplanenspanner - so zueinander eingerichtet sind, daß der Seitenplanenspanner mit seinem Grundelement in der mit seinem Einsteckabschnitt in die Einstecktasche eingesteckten Stellung vor einem Spannen der Seitenplane von dem ortsfesten Element nach außen absteht. Durch Verschwenken des Grundelementes gegenüber dem ortsfesten Element, wobei sich der Einsteckabschnitt des Grundelementes in der Einstecktasche abstützt, erfolgt ein Spannen der Seitenplane. Die Spann- bzw. Geschlossen-Stellung des Seitenplanenspanners wird fixiert durch einen Verschlußhaken, der in der Spann-Stellung die Verriegelungskante des ortsfesten Elementes, beispielsweise des Profils hintergreift. In vertikaler Richtung ist eine Bewegung des Grundelementes gegenüber dem ortsfesten Element, die dazu führen würde, daß entweder der Verschlußhaken aus seiner die Verriegelungskante hintergreifenden Stellung und/oder den Einsteckabschnitt des Grundelementes aus der Einstecktasche herausgebracht werden würde, durch das Zusammenwirken des Gegenanschlages mit dem Anschlagelement des ortsfesten Elementes verhindert. Der Seitenplanenspanner ist somit in seinen relevanten Bewegungsrichtungen am ortsfesten Element festgelegt und an diesem unabhängig von der auf der Seitenplane lastenden Spannung gehalten.

Durch den Gegenstand der Erfindung ist erstmals ein Seitenplanenspannsystem bereitgestellt, dessen Seitenplanenspanner unabhängig von der auf ihm lastenden, in der Seitenplane befindlichen Zugspannung sicher am Fahrzeug gehalten ist, so daß sich dieses System insbesondere zum Einsatz bei solchen Fahrzeugaufbauten eignet, die hohen Belastungen ausgesetzt sind, bei denen bei einem Einsatz herkömmlicher Seitenplanenspanneinrichtungen die Gefahr eines unerwünschten Lösens der Seitenplanenspanner vom Fahrzeugaufbau bestand. Besonders hohe Anforderungen werden an solche Systeme gestellt, wenn die Fahrzeugaufbauten, beispielsweise als Container oder im Huckepackverkehr auf Eisenbahnen im Tunnelverkehr eingesetzt sind.

Im Gegensatz zum vorbekannten Stand der Technik ist es beim Gegenstand der Erfindung sinnvoll, den Seitenplanenspanner innenseitig an der Seitenplane anzubringen, wodurch nicht nur die Ladefläche um die jeweilige Tiefe eines Seitenplanenspanners verbreitert ist, sondern auch die Außenseite der Plane in ihrer vollen Höhe für Bedruckungen zur Verfügung steht. Durch das innenseitige Befestigen der Seitenplanenspanner ist ebenfalls eine sich beim vorbekannten Stand der Technik einstellende Faltenbildung im unteren Endbereich der Plane beim Spannen derselben vermieden. Gleichfalls sind die Seitenplanenspanner durch die Seitenplane abgedeckt, so daß durch den glatten äußeren Abschluß des Fahrzeugaufbaus nicht nur das optische Erscheinungsbild verbessert, sondern auch das von den ansonsten auf der Plane befindlichen Seitenplanenspannern ausgehende Gefahrenpotential reduziert ist.

In einer zweckmäßigen Ausgestaltung ist das Grundelement des Seitenplanenspanners aus einem Vollmaterial zweckmäßigerweise einem Kunststoffblock hergestellt, so daß die an einer Seite des Fahrzeugaufbaus befindlichen Seitenplanerspanner zusätzlich als Rammschutz dienen können.

Das ortsfeste Element, an dem die Seitenplanenspanner zum Spannen der Seitenplane festgelegt sind, ist zweckmäßigerweise ein Profil mit einem vertikal verlaufenden Anlageschenkel, bei dem die Einstecktasche durch einen horizontal verlaufenden Schenkel, an dessen äußerem Ende ein nach unten abragender Begrenzungsschenkel angeformt ist.

Die Verriegelungskante des ortsfesten Elementes ist zweckmäßigerweise die untere Kante einer etwa V-förmigen Verkröpfung des Anlageschenkels, wobei die obere, an den Anlageschenkel grenzende Fläche der Vierkröpfung das Anschlagelement darstellt. Die untere Fläche der Verkröpfung stellt infolge ihrer Neigung eine Auflauffläche für den Verschlußhaken dar, so daß dieser selbsttätig in seine die Verriegelungskante hintergreifende Stellung lediglich durch Einschwenken des Seitenplanenspanners bringbar ist. In einem solchen Fall ist es zweckmäßig, den Verschlußhaken als Teil einer federbeaufschlagten Rasteneinrichtung vorzusehen, wobei der Verschlußhebel Teil eines unterseitig zum Grundelement angeordneten Bedienhebels ist, der schwenkbar an dem Grundelement angelenkt ist.

Die zum Fahrzeugaufbau weisende Außenseite des Verschlußhakens ist vorteilhafterweise in etwa in derselben Ebene angeordnet, die durch die Rückseite des Grundelementes definiert ist und mit dem das Grundelement an dem Anlageschenkel des ortsfesten Elementes anliegt. Durch diese Maßnahme ist sichergestellt, daß das aus der Einstecktasche nach einem Lösen des Seitenplanenspanners herausgenommene Grundelement an der Außenseite der Einstecktasche - etwa der Außenseite des Begrenzungsschenkels - mit seiner Rückseite vorbeigeführt werden kann, ohne daß die Gefahr besteht, daß sich der Verschlußhaken bei einem Aufrollen der Seitenplane an der Unterseite des Begrenzungsschenkels verhakt und somit die Aufrollbewegung behindern würde.

Eine Befestigung des Seitenplanenspanners an der Plane kann durch Einsatz starrer Befestigungsmittel, beispielsweise durch einen Nietverbund erfolgen. Dem Seitenplanenspanner sind zweckmäßigerweise Einrichternittel zugeordnet, die eine Einrichtung des Seitenplanenspanners bzw. seines Grundelementes in vertikaler Richtung zur Seitenplane erlauben, um auf diese Weise die Spannung der Plane einstellen zu können. Als derartige Einrichtemittel eignet sich insbesondere eine Stellschraube, die in dem Grundelement gelagert und sich mit ihrem Kopf an dem Grundelement abstützt und mit dem Schraubenschaft mit ihrem Gewinde in einen an der Seitenplane befestigten Befestigungswinkel eingreift. Der Befestigungswinkel ist vorteilhafterweise in einer Führungsausnehmung des Grundelementes geführt, so daß beim Drehen der Stellschraube die Stellung des Befestigungswinkels innerhalb der Führungsausnehmung eingerichtet werden kann.

Nachfolgend wird der Gegenstand der Erfindung anhand eines Ausführungsbeispieles unter Bezugnahme auf die beigefügten Figuren beschrieben. Es zeigen:
- **Fig. 1:**: Einen Querschnitt durch eine Einrichtung zum Spannen einer Seitenplane eines Fahrzeugaufbaus und
- **Fig. 2:**: Eine Außenansicht eines Seitenplanenspanners der Einrichtung der Figur 1.

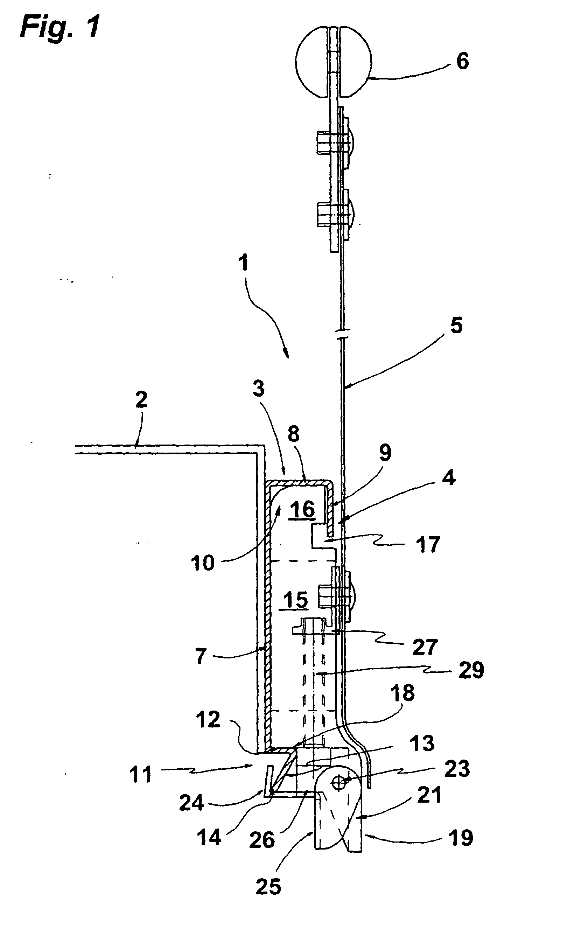

Eine Einrichtung 1 zum Spannen einer Seitenplane eines Fahrzeugaufbaus besteht im wesentlichen aus einem außenseitig am Außenrahmen 2 des ansonsten nicht näher dargestellten Fahrzeugaufbaus angeordnetem Profil 3, welches zum Festlegen der der in Figur 1 dargestellten Fahrzeugseite zugeordneten Seitenplanenspanner 4 dient. Die Seitenplanenspanner 4 befinden sich im Bereich des unteren Endes einer Seitenplane 5, an deren oberen Ende mehrere Rollen 6 angeordnet sind. Die Rollen 6 sind in einer in den Figuren nicht dargestellten Führungsschiene zum oberseitigen Halten der Seitenplane 5 geführt. Zum Öffnen dieser Seite des Fahrzeugaufbaus kann die Seitenplane 5 vorhangähnlich zu einer Seite geschoben werden. In den Figuren ist lediglich ein Seitenplanenspanner 4 gezeigt.

Das außenseitig am Außenrahmen 2 angeordnete Profil 3 besteht aus einem an dem vertikalen Schenkel des Außenrahmens 2 anliegenden Anlageschenkel 7, einem im Bereich des oberen Endes an den Anlageschenkel 7 grenzenden horizontal verlaufenden Schenkel 8 sowie einem den horizontalen Schenkel 8 außenseitig begrenzenden und nach unten abragenden Begrenzungsschenkel 9. Durch den oberen Abschnitt des Anlageschenkels 7, den horizontalen Schenkel 8 und dem Begrenzungsschenkel 9 ist eine Einstecktasche 10 gebildet. Unterseitig ist der Anlageschenkel 7 durch eine asymmetrische, V-förmige Verkröpfung 11 begrenzt. Der obere Schenkel 12 der Verkröpfung 11 verläuft in horizontaler Richtung und bildet einen Anschlag aus. Der weitere Schenkel 13 der Verkröpfung 11 ist nach unten hin zum Fahrzeugaufbau hin schräg verlaufend ausgebildet und bildet eine Auflauffläche. Das untere Ende des Schenkels 13 dient als Verriegelungskante 14.

Der Seitenplanenspanner 4 besteht im wesentlichen aus einem aus Kunststoff massiv hergestellten Grundelement 15, das als Spannhebel ausgebildet innenseitig an der Seitenplane 5 befestigt ist. Das Grundelement 15 umfaßt einen oberen Einsteckabschnitt 16, der ausgebildet ist, um in die Einstecktasche 10 des Profils 3 eingreifen zu können. Dabei ist vorgesehen, daß die Stärke des Einsteckabschnittes 16 des Grundelementes 15 dergestalt konzipiert ist, daß durch den Einsteckabschnitt 16 im wesentlichen die Weite (Abstand zwischen dem Anlageschenkel 7 und dem Begrenzungsschenkel 9) der Einstecktasche 10 ausgefüllt ist, um weitestgehend spielfrei in der Spann-Stellung des Seitenplanenspanners 4 gegenüber dem Profil 3 darin aufgenommen zu sein. Der Einsteckabschnitt 16 ist durch eine Nut 17 von den weiteren, unterseitig an den Einsteckabschnitt 16 grenzenden Abschnitten des Grundelementes 15 getrennt. Die Nut 15 dient zum Ermöglichen eines Einschwenkens des Grundelementes 15 mit seinem Einsteckabschnitt 16 in die Einstecktasche 10 um diese Schwenkbewegung nicht durch das untere Ende des Begrenzungsschenkels 9 zu behindern.

Das Grundelement 15 weist an seiner Rückseite eine Stufe 18 auf, die als Gegenanschlag mit der Anschlagfläche 13 des Profils 3 zusammenwirkt, um eine vertikale Bewegung des Seitenplanenspanners 4 zu begrenzen bzw. zu verhindern. Die eigentliche Handhabe 19 des als Spannhebel ausgebildeten Grundelementes 15 befindet sich im unteren Endabschnitt des Grundelementes 15. Im Bereich der Handhabe 19 befinden sich zwei Wangen 20, 21, die oberseitig zur Ausbildung der Handhabe durch eine Abdeckplatte 22 miteinander verbunden sind. Die Wangen 20, 21 dienen zum Lagern einer Schwenkachse 23, an der ein durch eine Feder F beaufschlagter Verschlußhaken 24 schwenkbar gegenüber dem Grundelement 15 angelenkt ist. Angeformt an den Verschlußhaken 24 ist ein Bedienhebel 25 zum Betätigen des Verschlußhakens 24. Durch die Federbelastung ist der Verschlußhaken 24 in seiner in Figur 1 gezeigten Stellung gehalten. In dieser Stellung befindet sich der Verschlußhaken 24 auch an bzw. nahe einem weiteren Anschlag 26 des Grundelementes 15, so daß auch in der Offen-Stellung des Seitenplanenspanners 4 sich der Verschlußhaken 24 in der in Figur 1 gezeigten Stellung zu dem Grundelement 15 befindet. Die Verschwenkbewegung des Verschlußhakens 24 ist durch einen Pfeil gekennzeichnet.

Die Seitenplane 5 ist über einen Befestigungswinkel 27 des Seitenplanenspanners 4 mit diesem verbunden. Der Befestigungswinkel 27 liegt mit seiner zur Innenseite der Plane 5 weisenden Seite innenseitig an der Plane 5 an und ist an dieser beispielsweise durch Einsatz einer Gegenplatte durch einen Nietverbund befestigt.

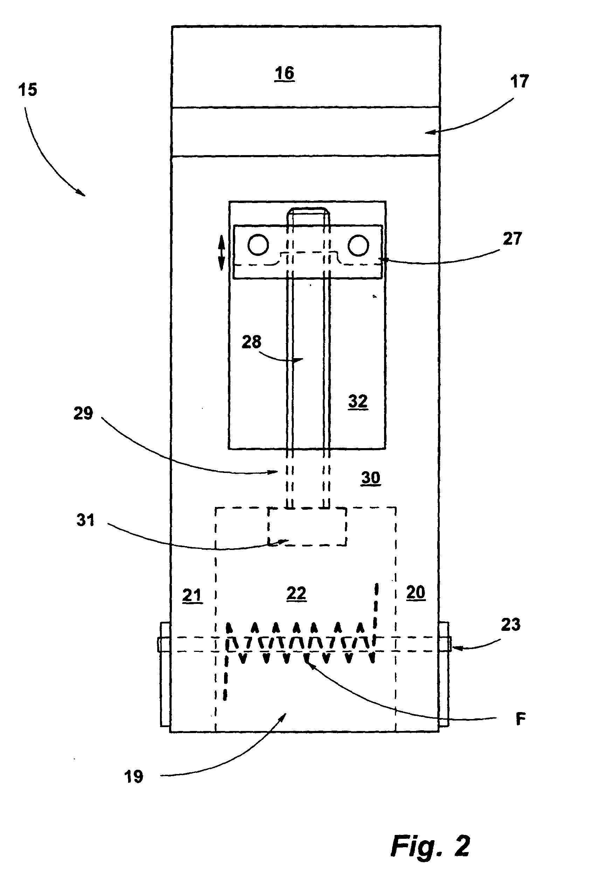

Der weitere Schenkel des Befestigungswinkels 27 ist von der Seitenplane 5 wegweisend angeordnet und umfaßt eine Gewindebohrung, in die der mit einen Außengewinde versehene Schaft 28 einer Stellschraube 29 eingreift. Die Stellschraube 29 ist in einem Steg 30 des Grundelements 15 gelagert und stützt sich mit ihrem Kopf 31 an diesem ab. Der Befestigungswinkel 27 ist in einer Führungsausnehmung 32 des Grundelementes 15 geführt. Durch eine Betätigung der Stellschraube 29 kann der Befestigungswinkel 27 innerhalb der Führungsausnehmung 32 entsprechend den in Figur 2 gezeigten Pfeilrichtungen in die ein oder andere Richtung bewegt werden, so daß auf diese Weise eine Einrichtung des Seitenplanenspanners 4 in vertikaler Richtung relativ zur Seitenplane 5 möglich ist.

Zum Spannen der Seitenplane 5 werden zunächst die Einsteckabschnitt 16 der Seitenplane 5 zugeordneten Seitenplanenspanner 4 in die Einstecktasche 10 des Profils 3 eingehängt. In dieser nicht gespannten Stellung ist das Grundelement 15 bzw. der gesamte Seitenplanenspanner 4 geneigt zur Ebene der Seitenplane 5 angeordnet. Durch Einschwenken des Seitenplanenspanners 4 zum Profil 3 hin, wobei sich der obere Abschluß des Einsteckabschnittes 16 an der Innenseite der Einstecktasche 10 als Widerlager abstützt, wird die Seitenplane 5 gespannt. Im Verlauf dieser Verschwenkbewegung wird die Außenseite des Verschlußhakens 24 in Kontakt mit der Auflauffläche 13 des Profils 3 gebracht, so daß sich der Verschlußhaken 24 öffnet, um bei weiterer Verschwenkbewegung des Seitenplanenspanners 4 die Verriegelungskante 14 des Profils 3 zu hintergreifen und infolge der Federbelastung in seine in Figur 1 gezeigte Stellung zu schnappen. In dieser Position ist der Seiteplanenspanner 4 an dem Profil 3 festgelegt und kann nur durch Öffnen des Verschlußhakens 24 von dem Profil 3 wieder gelöst werden.

### Zusammenstellung der Bezugszeichen

- 1: Einrichtung
- 2: Außenrahmen
- 3: Profil
- 4: Seitenplanenspanner
- 5: Seitenplane
- 6: Rollen
- 7: Anlageschenkel
- 8: Schenkel, horizontal
- 9: Begrenzungsschenkel
- 10: Einstecktasche
- 11: Verkröpfung
- 12: Schenkel, Anschlag
- 13: Schenkel, Auflauffläche
- 14: Verriegelungskante
- 15: Grundelement
- 16: Einsteckabschnitt
- 17: Nut
- 18: Gegenanschlag, Stufe
- 19: Handhabe
- 20: Wange
- 21: Wange
- 22: Abdeckplatte
- 23: Schwenkachse
- 24: Verschlußhaken
- 25: Bedienhebel
- 26: Anschlag
- 27: Befestigungswinkel
- 28: Schaft
- 29: Stellschraube
- 30: Steg
- 31: Kopf
- 32: Führungsausnehmung

- F: Feder

## Patentansprüche

1. Einrichtung zum Spannen einer oberseitig gehaltenen Seitenplane (5) eines Fahrzeugaufbaus, umfassend zumindest einen im Bereich des unteren Endes der Seitenplane (5) angeordneten und mit der Seitenplane verbundenen Seitenplanenspanner (4), ein ortsfest am Fahrzeugaufbau angeordnetes Element (3) als Widerlager für den Seitenplanenspanner (4) zum Spannen der Seitenplane (5) und Mittel, mit denen der Seitenplanenspanner in seiner die Plane (5) spannenden Stellung an dem ortsfesten Element festlegbar ist, **dadurch gekennzeichnet, daß** das ortsfest am Fahrzeugaufbau angeordnete Element (3) in seinem Querschnitt oberseitig eine nach unten offene Einstecktasche (10) und im Bereich seines unteren Endes eine Verriegelungskante (14) sowie zwischen diesen beiden Elementen ein nach unten wirkendes Anschlagelement (12) aufweist und der Seitenplanenspanner (4) ein als Spannhebel dienendes und mit der Seitenplane (5) verbundenes Grundelement (15), von dem zumindest ein Teil seines oberen Endbereiches als Einsteckabschnitt (16) zum Einstecken (10) in die Einstecktasche des ortsfesten Elementes (3) ausgebildet und an dem schwenkbar ein Verschlußhaken (24) zum Hintergreifen der Verriegelungskante (14) des ortsfesten Elementes (3) angelenkt ist, und einen Gegenanschlag (18) zum Zusammenwirken mit dem Anschlagelement (12) des ortsfesten Elementes (3) umfaßt.

2. Einrichtung nach Anspruch 1, **dadurch gekennzeichnet, daß** das ortsfeste Element ein Profil (3) mit einem vertikal verlaufenden Anlageschenkel (7) ist und die Einstecktasche (10) durch einen horizontal vom Anlageschenkel (7) vom Fahrzeugaufbau weg horizontal verlaufenden Schenkel (8), an dessen äußerem Ende ein nach unten abragender Begrenzungsschenkel angeformt ist, gebildet ist.

3. Einrichtung nach Anspruch 1 oder 2, **dadurch gekennzeichnet, daß** die Verriegelungskante (14) des ortsfesten Elementes (3) die untere Kante einer zum Fahrzeugaufbau hin wirkenden Auflauffläche (13) einer etwa V-förmigen, vom Fahrzeugaufbau weggerichteten Verkröpfung (11) ist, deren obere Fläche (12) das Anschlagselement bildet.

4. Einrichtung nach einem der Ansprüche 1 bis 3, **dadurch gekennzeichnet, daß** der Einsteckabschnitt (16) des Grundelementes (15) des Seitenplanenspanners (4) die Weite der Einstecktasche (10) des ortsfesten Elements (3) im Wesentlichen vollständig ausfüllt.

5. Einrichtung nach Anspruch 4, **dadurch gekennzeichnet, daß** zwischen dem die Weite der Einstecktasche (10) im wesentlichen ausfüllenden Einsteckabschnitt (16) und den anschließenden Abschnitten des Grundelementes (15) eine Nut (17) angeordnet ist, in die beim Ein- bzw. Ausschwenken des Einsteckabschnittes (16) des Seitenplanenspanners (4) in bzw. aus der Einstecktasche (10) des ortsfesten Elementes (3) der untere Abschnitt des Begrenzungssteges (9) des ortsfesten Elementes (3) eingreift.

6. Einrichtung nach einem der Ansprüche 1 bis 5, **dadurch gekennzeichnet, daß** der Verschlußhaken (24) Teil einer federbeaufschlagten Rasteneinrichtung, die zum Betätigen des Verschlußhakens (24) einen unterseitig zum Grundelement (15) angeordneten Bedienhebel (25) umfaßt.

7. Einrichtung nach einem der Ansprüche 1 bis 6, **dadurch gekennzeichnet, daß** die Außenseite des Verschlußhakens (24) in etwa in derselben Ebene angeordnet ist, die durch die Rückseite des Grundelementes (15) definiert ist.

8. Einrichtung nach einem der Ansprüche 1 bis 7, **dadurch gekennzeichnet, daß** der Seitenplanenspanner (4) mit starren Befestigungsmitteln an der Innenseite der Seitenplane (5) befestigt ist.

9. Einrichtung nach Anspruch 8, **dadurch gekennzeichnet, daß** der Seitenplanenspanner (4) Mittel zum Einrichten des Grundelements (15) in vertikaler Richtung relativ zur Seitenplane (5) umfaßt.

10. Einrichtung nach Anspruch 9, **dadurch gekennzeichnet, daß** die Einrichtemittel eine sich mit ihrem Kopf (31) am Grundelement (15) abstützende und in diesem gelagerte Stellschraube (29) umfaßt, deren Schraubenschaft (28) mit ihrem Gewinde in einem an der Seitenplane (5) befestigten Befestigungswinkel (27) eingreift.

11. Einrichtung nach Anspruch 10, **dadurch gekennzeichnet, daß** der Befestigungswinkel (27) in einer Ausnehmung (32) des Grundelementes (15) geführt ist.

12. Einrichtung nach einem der Ansprüche 1 bis 11, **dadurch gekennzeichnet, daß** das Grundelement (15) ein Vollkörper, zweckmäßigerweise ein Kunststoffkörper ist.

## Claims

1. Device for tensioning a side tarpaulin (5), held on the upper side, of a vehicle body, said device comprising at least one side tarpaulin tightener (4), disposed in the region of the lower end of the side tarpaulin (5) and connected to said side tarpaulin, an element (3) arranged in a stationary manner on the vehicle body as an abutment for the side tarpaulin tightener (4) for tensioning the side tarpaulin (5), and means with which the side tarpaulin tightener may be fixed, in its position tensioning the tarpaulin (5), to the stationary element, **characterised in that** the element (3) arranged in a stationary manner on the vehicle body has in its cross-section on the upper side a downwardly open slide-in pocket (10) and in the region of its lower end a locking edge (14) as well as a downwardly acting stop member (12) between these two elements, and the side tarpaulin tightener (4) includes a base element (15), which serves as a tension lever and is connected to the side tarpaulin (5) and of which at least a portion of its upper end region is configured as a slide-in portion (16) for insertion (10) into the slide-in pocket of the stationary element (3) and to which base element is pivotably hinged a closure hook (24) for engaging behind the locking edge (14) of the stationary element (3), said tightener also including a counter-stop (18) for cooperating with the stop member (12) of the stationary element (3).

2. Device according to claim 1, **characterised in that** the stationary element is a section (3) with a vertically extending bearing limb (7) and the slide-in pocket (10) is formed by a leg (8) extending horizontally from the bearing limb (7) away from the vehicle body, a downwardly protruding limiting leg being formed on the outer end of leg (8).

3. Device according to claim 1 or 2, **characterised in that** the locking edge (14) of the stationary element (3) is the lower edge of a run-up surface (13), acting towards the vehicle body, of a roughly V-shaped right-angled portion (11) which is directed away from the vehicle body and the upper face (12) of which forms the stop member.

4. Device according to one of claims 1 to 3, **characterised in that** the slide-in portion (16) of the base element (15) of the side tarpaulin tightener (4) completely fills the width of the slide-in pocket (10) in the stationary element (3).

5. Device according to claim 4, **characterised in that** between the slide-in portion (16) , which substantially fills the width of the slide-in pocket (10) and the adjoining portions of the base element (15) is arranged a groove (17) in which the lower portion of the limiting web (9) of the stationary element (3) engages when the slide-in portion (16) of the side tarpaulin tightener (4) is pivoted into or out of the slide-in pocket (10).

6. Device according to one of claims 1 to 5, **characterised in that** the closure hook (24) comprises part of a spring-biased locking device which has an operating lever (25) arranged on its lower side relative to the base element (15) for actuating the closure hook (24).

7. Device according to one of claims 1 to 6, **characterised in that** the outer side of the closure hook (24) is arranged roughly in the same plane as that defined by the rear side of the base element (15).

8. Device according to one of claims 1 to 7, **characterised in that** the side tarpaulin tightener (4) is secured by rigid fastening means to the inner side of the side tarpaulin (5).

9. Device according to claim 8, **characterised in that** the side tarpaulin tightener (4) includes means for adjusting the base element (15) in a vertical direction relative to the side tarpaulin (5).

10. Device according to claim 9, **characterised in that** the adjusting means include an adjusting screw (29) which is supported with its head (31) on the base element (15) and is mounted in same, and the shank (28) of which engages with its thread in an angle bracket (27) secured to the side tarpaulin (5).

11. Device according to claim 10, **characterised in that** the angle bracket (27) is guided in a recess (32) in the base element (15).

12. Device according to one of claims 1 to 11, **characterised in that** the base element (15) is a solid body, expediently a plastics material body.

## Revendications

1. Dispositif de tension d'une bâche latérale (5), maintenue sur la face supérieure d'une carrosserie de véhicule comprenant au moins un tensionneur (4) relié à la bâche latérale et disposé au niveau de l'extrémité inférieure de la bâche latérale (5), un élément (3) disposé de manière fixe sur la carrosserie du véhicule et faisant office de butée pour le tensionneur (4) afin de tendre la bâche latérale (5) et des moyens par lesquels le tensionneur peut être fixé à l'élément fixe, dans sa position tendant la bâche (5), **caractérisé en ce que** l'élément (3) disposé de manière fixe sur la carrosserie du véhicule présente dans sa section, sur la face supérieure, une poche d'enfichage (10) ouverte vers le bas et au niveau de son extrémité inférieure, une arête de verrouillage (14) ainsi qu'un élément de butée (12) agissant vers le bas, disposé entre les deux éléments précédents et que le tensionneur (4) comporte un élément de base (15) faisant office de levier de tension et relié à la bâche latérale (5), dont au moins une partie de sa zone d'extrémité supérieure est conformée en tronçon d'enfichage (16) permettant l'enfichage dans la poche d'enfichage (10) de l'élément fixe (3) et sur lequel est articulé de manière pivotante un crochet de verrouillage (24) destiné à saisir par l'arrière l'arête de verrouillage (14) de l'élément fixe (3), et une contre-butée (18) agissant conjointement avec l'élément de butée (12) de l'élément fixe (3).

2. Dispositif selon la revendication 1 **caractérisé en ce que** l'élément fixe est un profilé (3) avec un montant d'appui (7) s'étendant verticalement et que la poche d'enfichage (10) est formée par un montant (8) s'étendant horizontalement depuis le montant d'appui (7) en s'éloignant de la carrosserie du véhicule, sur l'extrémité duquel est formé un montant de limitation en saillie vers le bas.

3. Dispositif selon la revendication 1 ou 2 **caractérisé en ce que** l'arête de verrouillage (14) de l'élément fixe (3) est l'arête inférieure d'une surface de contact (13) agissant vers la carrosserie du véhicule, selon un coudage (11) à peu près en forme de V et orienté dans le sens opposé à la carrosserie du véhicule, dont la surface (12) supérieure forme l'élément de butée.

4. Dispositif selon l'une des revendications 1 à 3 **caractérisé en ce que** le tronçon d'enfichage (16) de l'élément de base (15) du tensionneur (4) remplit totalement et pour l'essentiel la largeur de la poche d'enfichage (10) de l'élément fixe (3).

5. Dispositif selon la revendication 4 **caractérisé en ce qu'**une rainure (17) est disposée entre le tronçon d'enfichage (16) remplissant sensiblement la profondeur de la poche d'enfichage (10) et les tronçons contigus de l'élément de base (15), dans laquelle s'engage le tronçon inférieur du montant de limitation (9) de l'élément fixe (3) lors de l'engagement ou du désengagement par pivotement du tronçon d'enfichage (16) du tensionneur dans la poche d'enfichage (10) de l'élément fixe (3) ou hors de celle-ci.

6. Dispositif selon l'une des revendications 1 à 5 **caractérisé en ce que** le crochet de verrouillage (24) est une partie d'un dispositif d'encliquetage actionné par ressort, qui comprend, afin d'actionner le crochet de verrouillage (24) un levier d'actionnement (25) disposé sur la face inférieure de l'élément de base (15).

7. Dispositif selon l'une des revendications 1 à 6 **caractérisé en ce que** la face extérieure du crochet de verrouillage (24) est disposée à peu près sur le même plan que celui défini par la face arrière de l'élément de base (15).

8. Dispositif selon l'une des revendications 1 à 7 **caractérisé en ce que** le tensionneur (4) est fixé à l'aide de moyens de fixation rigides sur la face intérieure de la bâche latérale (5).

9. Dispositif selon la revendication 8 **caractérisé en ce que** le tensionneur (4) comprend des moyens permettant d'ajuster l'élément de base (15) dans le sens vertical par rapport à la bâche latérale (5).

10. Dispositif selon la revendication 9 **caractérisé en ce que** les moyens de réglage comprennent une vis d'ajustage (29) qui s'appuie par sa tête (31) sur l'élément de base (15) et est logée dans ce dernier, dont la tige (28) s'engage au moyen de son filetage dans une équerre de fixation (27) fixée à la bâche latérale (5).

11. Dispositif selon la revendications 10 **caractérisé en ce que** l'équerre de fixation (27) est guidée dans un évidement (32) de l'élément de base (15).

12. Dispositif selon l'une des revendications 1 à 11 **caractérisé en ce que** l'élément de base (15) est un corps plein, judicieusement un corps en matière plastique.
